# EUROPÄISCHE PATENTSCHRIFT

(11) **EP 1 539 551 B1**
(45) Veröffentlichungstag und Bekanntmachung des Hinweises auf die Patenterteilung: **17.02.2010**
(21) Anmeldenummer: 03797150.4
(22) Anmeldetag: 13.03.2003
(51) Int. Cl.: B60S 1/58, B60S 1/16

(54) **VORRICHTUNG ZUR AUFNAHME EINES SCHLIESSELEMENTS AN EINEM WISCHERANTRIEB**
DEVICE FOR ACCOMMODATING A LOCKING ELEMENT ON A WIPER DRIVE
DISPOSITIF PERMETTANT DE MONTER UN ELEMENT DE VERROUILLAGE SUR UN MECANISME D'ENTRAINEMENT D'ESSUIE-GLACE

(30) Priorität: 12.09.2002 DE 20214130 U
(43) Veröffentlichungstag der Anmeldung: 15.06.2005
(73) Patentinhaber: ROBERT BOSCH GMBH, 70442 Stuttgart (DE)
(72) Erfinder: PATRIX, Bernhard, 77830 Buehlertal (DE); BOHN, Roland, 77815 Buehl (DE); MAHFOUDH, Samir, 77815 Buehl (DE)
(86) Internationale Anmeldenummer: PCT/DE2003/000799
(87) Internationale Veröffentlichungsnummer: WO 2004/026647

(56) Entgegenhaltungen:
- DE-A- 3 026 174
- DE-A- 10 006 412
- US-A- 5 841 249
- US-A- 5 986 351
- US-A- 6 123 384
- US-A1- 2001 005 084
- US-A1- 2001 013 236

## Beschreibung

### Technisches Gebiet

Bei Kraftfahrzeugen wie z.B. Minivans, Kleinbussen oder auch Geländewagen können die Heckscheiben bei geschlossener Heckklappe unabhängig von dieser geöffnet werden, was den Zugriff auf den Stauraum im rückwärtigen Fahrzeugbereich gestattet, wenn aufgrund beengter Raumverhältnisse das Öffnen bzw. Hochschwenken einer Heckklappe nicht möglich sein sollte. Die schwenkbar angeordnete Heckscheibe ist in der Schließstellung mittels eines Schließelements an der Heckklappe verrastbar. Bei Fahrzeugen mit Heckscheibenwischer kann der Heckscheibenwischerantrieb unmittelbar an der Heckscheibe oder in die Heckklappe integriert sein.

### Stand der Technik

Bei Fahrzeugen, deren Heckscheiben mit einem Heckscheibenwischer versehen sind und deren Heckscheiben relativ zur Heckklappe bewegbar sind, ist ein Verriegelungssystem an der Heckscheibe zu deren Verriegelung in ihrer Schließposition erforderlich. Dieses Verriegelungssystem ist optional bei verschiedenen Fahrzeugvarianten auch in das Zentralverriegelungssystem eingebunden. Ist der Wischerträger des Heckscheibenwischers nicht an der Klappe, sondern an der relativ zur Heckklappe aufschwenkbaren Heckscheibe befestigt, wird ein zur Verriegelung der Heckklappe erforderliches Schließsystem in Gestalt eines Schlossbügels oder dergleichen an einem Aufnahmeblech des Wischerantriebs angebracht.

Gemäß bisherigen Lösungen stellen der den Heckscheibenwischer antreibende Wischermotor, dessen Kupplung und das Wischerlager eine konstruktiv aufwändige Lösung dar. Daher wird dazu übergegangen, den Wischermotor des Heckscheibenwischers direkt an der Heckscheibe zu befestigen, was die Komponentenanzahl einer Heckscheibenwischeranlage reduziert. Da das die Verriegelungselemente der Heckscheibe aufnehmende Aufnahmeblech entfällt, die Heckscheibe jedoch verriegelbar bleiben soll, sind neue Lösungen erforderlich.

Dokument US 2001/005084 offenbart einer Wischerantrieb mit den Merkmalen des Oberbegriffs des Anspruchs 1.

### Darstellung der Erfindung

Nach der erfindungsgemäß vorgeschlagenen Lösung laut Anspruch 1 wird ein Verriegelungselement für die Heckscheibe unter Einsparung einer separaten Aufnahme am Wischerantrieb, einen Wischermotor und ein diesem zugeordnetes Getriebe enthaltend, integriert. Eine Aufnahme für ein die Heckscheibe in ihrer Schließstellung verriegelndes Verriegelungselement kann in den Getriebedeckel integriert werden, der in der Regel als Kunststoffspritzgießteil ausgeführt wird. Eine in einem Getriebedeckel oder einer anderen Gehäusekomponente der Wischerantriebseinheit integrierte Aufnahme für ein Verriegelungselement bietet den Vorteil, dass kein separates, zusätzlich zu montierendes Bauelement vorliegt, so dass die Montage vereinfacht und eine Addition von Toleranzen an den miteinander zu fügenden Bauteilen verringert wird. Die Toleranzkette kann somit erheblich verkürzt werden.

Durch die erfindungsgemäß vorgeschlagene Integration der Aufnahme eines Verriegelungselements in eine Gehäusekomponente des Wischerantriebs lässt sich eine Sicherung des Verriegelungselements auf einfachem Wege erstellen. Wird die Aufnahme des Verriegelungselements als zwei zylindrische Aufnahmekörper umfassend ausgeführt, so lässt sich an einem der Zylinderkörper eine Unterbrechung vorsehen. Diese Unterbrechung dient der Aufnahme eines Sicherungselements, welches auf einem der Schenkel des Verriegelungselements aufgenommen ist. Die Unterbrechung an einem der zylindrischen Aufnahmekörper zur Aufnahme des Verriegelungselements wird in einer Schlitzbreite ausgeführt, welche in vorteilhafter Weise eine Verschiebbarkeit des Verriegelungselements in seiner Aufnahme bestimmt. Eine Verschiebbarkeit des Verriegelungselements ist zum Toleranzausgleich und zur Einstellung der Verriegelungsposition beim Einbau an der Heckscheibe eines Fahrzeugs erforderlich. Als Sicherungselement wird bevorzugt ein an seiner Umfangsfläche eine Öffnung aufweisender, federnd ausgebildeter Sicherungsring eingesetzt, welcher an einem Schenkel des Verriegelungselements verliersicher aufnehmbar ist.

### Zeichnung

Anhand der Zeichnung wird die Erfindung nachstehend näher erläutert.

Es zeigt:
- Figur 1: eine Teildarstellung eines an einer Heckscheibe montierbaren Wischerantriebs mit einer Aufnahme für ein Verriegelungselement,
- Figur 2: den Wischerantrieb mit Wischermotor und diesem zugeordneten Getriebe,
- Figur 3: eine perspektivische Draufsicht auf die Aufnahme des Verriegelungselements,
- Figur 4: eine in vergrößertem Maßstab dargestellte Ansicht eines zylindrischen Auf- nahmekörpers einer Aufnahme für ein Verriegelungselement,
- Figur 5: eine perspektivische Draufsicht auf zwei parallel angeordnete zylindrische Aufnahmekörper und
- Figur 6: eine Ansicht einer am Wischantrieb ausgebildeten Steckeraufnahme.

### Ausführungsvarianten

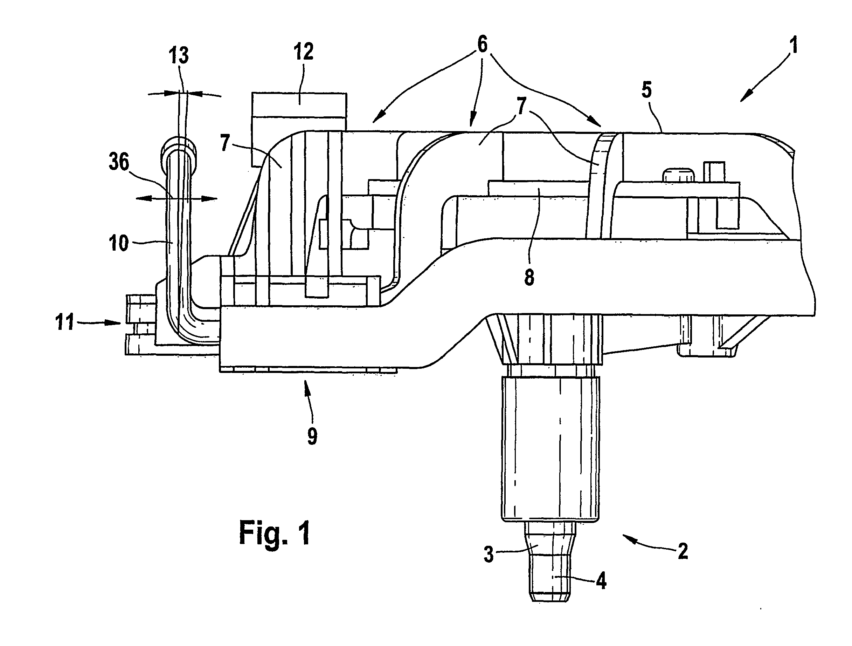

Fig. 1 ist eine Teildarstellung eines an einer verschwenkbaren Heckscheibe montierbaren Wischerantriebs mit einer Aufnahme für ein Verriegelungselement zu entnehmen.

Ein in Fig. 1 dargestellter Wischerantrieb 1 umfasst eine Wischeraufnahme 2, an der ein in Fig. 1 nicht dargestellter Wischarm befestigbar ist. Dazu umfasst eine Antriebswelle 4 für den Wischarm einen konisch ausgebildeten Bereich 3, auf den der Wischarm einfach aufsteckbar ist. Mittels der Antriebswelle 4 für den Wischarm wird dieser angetrieben, so dass er einen ca. halbkreisförmig konfigurierten Bereich der Heckscheibe eines Fahrzeugs überstreicht.

Der Wischerantrieb 1 umfasst ein Deckelteil 5, welches mit einer Deckelteilverrippung 6 versehen ist. Die Deckelteilverrippung 6 umfasst Radialrippen 7, die sich von einem zentralen Bereich des Deckelteils 5 bis in dessen Peripherie erstrecken, sowie mit Bezugszeichen 8 bezeichnete Längsrippen. Seitlich am Deckelteil 5 des Wischerantriebs 1 ist eine Aufnahme 9 für ein mit Bezugszeichen 10 bezeichnetes Verriegelungselement angeordnet. Das Verriegelungselement 10 ist bügelförmig ausgebildet und mit Spiel 13 in der am Deckelteil 5 integrierten Aufnahme 9 aufgenommen. Die in Fig. 1 nicht dargestellten, die Schenkel des Verriegelungselements 10 aufnehmenden Hohlräume innerhalb der Aufnahme 9 sind mit leichtem Spiel in Bezug auf den Durchmesser der Schenkel des Verriegelungselements 10 ausgeführt, so dass das Verriegelungselement, dessen Bewegungsrichtung mit Bezugszeichen 36 gekennzeichnet ist, eine mit den Pfeilen 13 angedeutete leichte Schwenkbewegung ausführen kann. Darüber hinaus ist am Deckelteil 5 des Wischerantriebs 1 im Bereich einer Radialrippe 7 eine Steckeraufnahme 12 angeordnet.

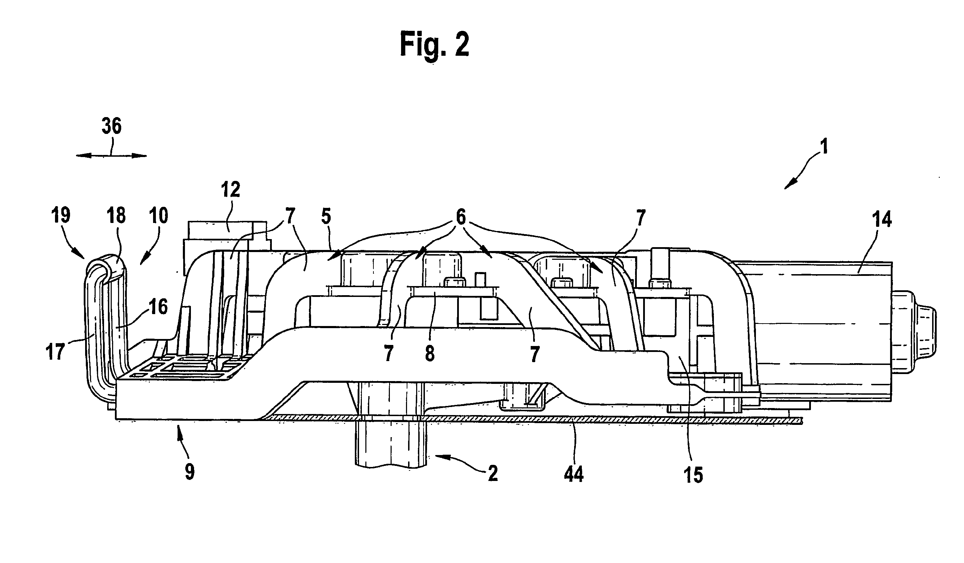

Der Darstellung gemäß Fig. 2 ist der Wischerantrieb mit Wischermotor und ein diesem zugeordnetes Getriebe in einer perspektivischen Ansicht entnehmbar.

Im Deckelteil 5 des Wischerantriebs 1 ist eine Wischarmaufnahme 2 gelagert, welche an einer Öffnung eine schwenkbar an einer Heckklappe eines Fahrzeugs gelagerte Scheibenfläche 44 durchsetzt. An der Wischarmaufnahme 2 gemäß der Darstellung in Fig. 2 ist der in Fig. 1 wiedergegebene konische Bereich ausgebildet, auf den ein Wischarm einfach aufsteckbar ist. Das Deckelteil 5 des Wischerantriebs 1 wird unmittelbar an der Innenseite der Scheibenfläche 44 befestigt. Das Deckelteil 5 weist die in Fig. 1 dargestellte Deckelverrippung 6 auf, welche sowohl Radialrippen 7 als auch Längsrippen 8 umfasst. Seitlich am Deckelteil 5 ist ein Wischermotor 14 gelagert, der über ein diesem zugeordnetes Getriebe 15 die Wischarmaufnahme 2 antreibt. Der Wischermotor 14 wird bevorzugt als ein reversierender Antrieb ausgebildet, der nach Erreichen einer Endlage eine Drehrichtungsumkehr vollzieht und den an der Wischarmaufnahme 2 aufgenommenen Wischarm in die gegenüberliegende Endlage bewegt. Dabei wird im Allgemeinen ein halbkreisförmiger Wischbereich an der Heckscheibe eines Fahrzeugs überstrichen. Der Aufnahmeposition des Wischermotors 14 gegenüberliegend befindet sich auf der anderen Seite des Deckelteils 5 die Aufnahme 9 zur Aufnahme des Verriegelungselements 10. Das Verriegelungselement 10 ist bügelförmig ausgeführt und umfasst einen ersten Schenkel 16 sowie einen zweiten Schenkel 17. Der erste Schenkel 16 und der zweite Schenkel 17 sind durch einen Bügel 19 miteinander verbunden, der von einer aus Kunststoff herstellbaren Ummantelung 18 umschlossen sein kann. Die Bewegungsrichtung des bügelförmig ausgebildeten Verriegelungselements 10 ist durch den mit Bezugszeichen 36 bezeichneten Doppelpfeil angegeben. In beide Richtungen entsprechend des Doppelpfeils 36 bewegen sich die abgewinkelt ausgebildeten Schenkelbereiche des ersten Schenkels 16 bzw. des zweiten Schenkels 17 des Verriegelungselements 10 in den in Fig. 2 nicht dargestellten Hohlräumen der Aufnahme 9. Ebenfalls im unteren Bereich des durch eine Deckelverrippung 6 versteiften Deckelteils 5, welches bevorzugt als ein Kunststoffspritzgussbauteil ausgebildet wird, ist die Steckeraufnahme 12 (vgl. Darstellung gemäß Fig. 1) zu entnehmen. In die Steckeraufnahme 12 wird ein Anschlußstecker zur Ansteuerung des Wischermotors 14 eingeführt und dort verrastet. Über den Anschlußstecker werden auch die Parkstellungen des Wischermotors 14 an diesen übertragen.

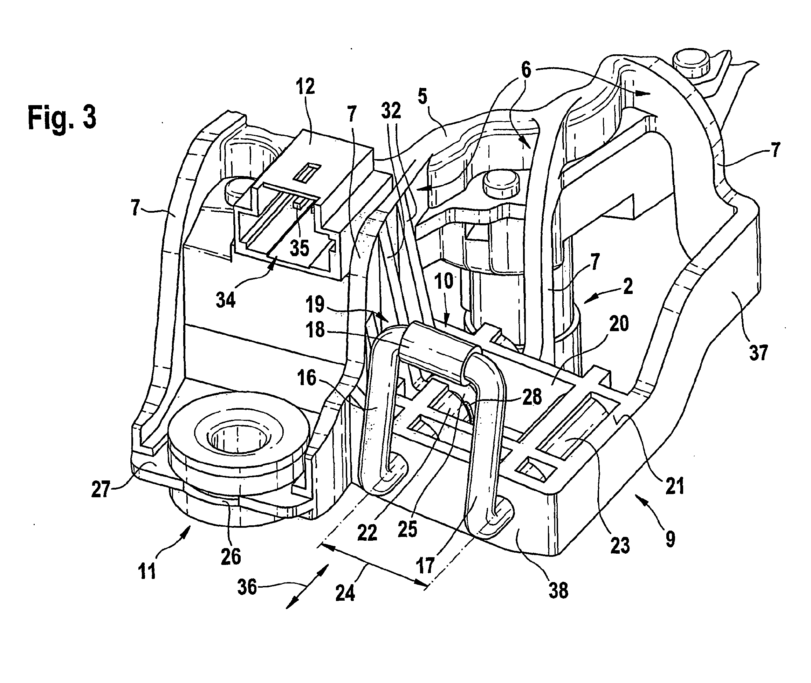

Fig. 3 ist eine perspektivische Draufsicht auf die am Deckelteil integrierte Aufnahme für ein Verriegelungselement zu entnehmen.

Das bevorzugt als Spritzgussbauteil hergestellte Deckelelement 5 umfasst die in den Figuren 1 und 2 dargestellten Längsrippen 8 sowie mehrere Radialrippen 7. Die Radialrippen 7 erstrecken sich in radialer Richtung bezogen auf einen zentralen Flächenbereich des Deckelelements 5. Am Deckelteil 5 ist eine Buchsenaufnahme 11 vorgesehen. Die Buchsenaufnahme 11 umfasst eine Sitzfläche 27, die eine Einschuböffnung 26 enthält. Durch diese Öffnung kann seitlich eine Buchse in die Buchsenaufnahme 11 eingeschoben werden, die sich auf der Sitzfläche 27 abstützt.

Die Buchsenaufnahme 11 ist mit dem Deckelteil 5 über zwei im Wesentlichen parallel zueinander angeordnete Radialrippen 7 verbunden. Zwischen den beiden Radialrippen 7 befindet sich die Steckeraufnahme 12, welche eine Öffnung 34 begrenzt, in welche ein Stecker eingeschoben wird. Im Inneren der Steckeraufnahme 12 sind Kontaktfahnen 35 ausgebildet, welche über einen in die Öffnung 34 eingeführten Stecker - der in der Darstellung gemäß Fig. 3 nicht wiedergegeben ist - kontaktiert werden.

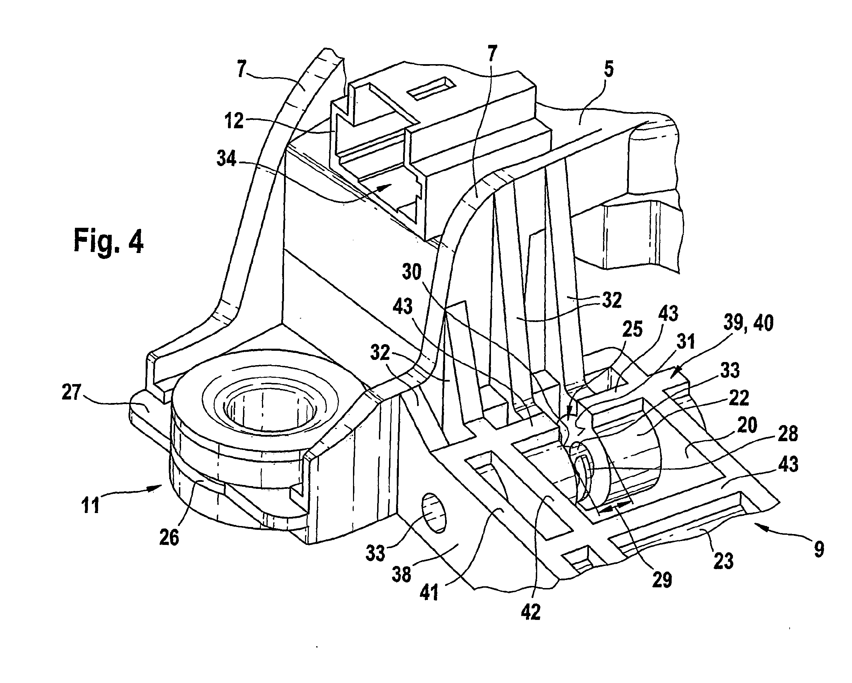

Seitlich am Deckelteil 5 ist die Aufnahme 9 für das Regelungselement 10 dargestellt. Die Aufnahme 9 ist seitlich am Deckelteil 5 angeformt und umfasst einen Querträger 38, der in einen Längsträger 37 übergeht, der sich an einer Radialrippe 7 der Deckelverrippung 6 am Deckelteil 5 abstützt. Darüber hinaus ist die Aufnahme 9 für das Verriegelungselement über eine in Fig. 3 angedeutete, in Fig. 4 detaillierter dargestellte Verrippung mit einer Radialrippe 7, die die Buchsenaufnahme 11 begrenzt, verbunden. Die Aufnahme 9, deren Oberseite als Planfläche 21 beschaffen ist, umfasst einen ersten zylindrischen Aufnahmekörper 22 und einen zweiten zylindrischen Aufnahmekörper 23. Der erste zylindrische Aufnahmekörper 22 sowie der zweite zylindrische Aufnahmekörper 23 sind im Wesentlichen parallel zueinander angeordnet. Der erste zylindrische Aufnahmekörper 22 und der zweite zylindrische Aufnahmekörper 23 umfassen jeweils Hohlräume, in welche die abgewinkelten Enden des ersten Schenkels 16 bzw. des zweiten Schenkels 17 des bügelförmig ausgebildeten Verriegelungselements 10 eingeschoben sind. Der erste zylindrische Aufnahmekörper 22 und der zweite zylindrische Aufnahmekörper 23 sind in einem Abstand 24 voneinander aufgenommen.

Einer der zylindrischen Aufnahmekörper 22 bzw. 23, in der Darstellung gemäß Fig. 3 der erste zylindrische Aufnahmekörper 22 ist mit einer Unterbrechung 25 versehen. Durch diese sich in axiale Richtung erstreckende Unterbrechung 25 am ersten zylindrischen Aufnahmekörper 22 ist dieser in zwei Teile geteilt. In der Darstellung gemäß Fig. 3 wird der erste zylindrische Aufnahmekörper 22 vom ersten Schenkel 16 des Verriegelungselements 10 durchsetzt. Die Bewegungsrichtung des Verriegelungselements 10 im ersten zylindrischen Aufnahmekörper 22 bzw. im zweiten zylindrischen Aufnahmekörper 23 ist durch den Doppelpfeil 36 angegeben.

Der erste Schenkel 16, der in den ersten zylindrischen Aufnahmekörper 22 einschiebbar und der in diesem Fall mit einer Unterbrechung 25 versehen ist, umfasst ein Sicherungselement 28. Das Sicherungselement 28 kann auf der Umfangsfläche des abgewinkelten Endes des ersten Schenkels 16 aufgebracht werden. Das Sicherungselement 28 wird bevorzugt als ein federnder Sicherungsring ausgebildet, der verliersicher an der Umfangsfläche des ersten Schenkels 16 des bügelförmig konfigurierten Verriegelungselements 10 aufnehmbar ist. Der erste Schenkel 16 sowie der zweite Schenkel 17 des bügelförmig konfigurierten Verriegelungselements 10 sind über einen Bügel 19 miteinander verbunden, der optional eine Kunststoffummantelung 18 aufweist. Diese ist jedoch nicht zwingend erforderlich.

Aus der perspektivischen Draufsicht gemäß Fig. 3 auf die Aufnahme 9 für ein Verriegelungselement 10 geht hervor, dass der erste zylindrische Aufnahmekörper 22 sowie der zweite zylindrische Aufnahmekörper 23 durch Querstege, von denen in der Darstellung gemäß Fig. 3 einer mit Bezugszeichen 20 identifiziert ist, versteift werden. Darüber hinaus können an den Oberseiten des ersten zylindrischen Aufnahmekörpers 22 sowie des zweiten zylindrischen Aufnahmekörpers 23 Längsrippen ausgeführt sein, die sich parallel zu den abgewinkelt ausgebildeten Enden des ersten Schenkels 16 bzw. zweiten Schenkels 17 des bügelförmig ausgebildeten Verriegelungselements 10 erstrecken.

Fig. 4 zeigt eine in vergrößertem Maßstab dargestellte perspektivische Ansicht eines zylindrischen Aufnahmekörpers, der eine Unterbrechung aufweist.

Aus der perspektivischen Ansicht gemäß Fig. 4 geht hervor, dass am Deckelteil 5, welches bevorzugt als Spritzgießbauteil gefertigt wird, neben einer Steckeraufnahme 12 und einer Buchsenaufnahme 11 die Aufnahme 9 für das in Fig. 4 nicht dargestellte Verriegelungselement 10 angeordnet ist. Zwischen zwei Radialrippen 7 liegend ist die Steckeraufnahme 12 dargestellt, deren Öffnung mit Bezugszeichen 34 gekennzeichnet ist. Ebenfalls durch die Radialrippen 7 des als Kunststoffspritzgießteil ausgebildeten Deckelteils 5 wird die Buchsenaufnahme 11 sowie deren Sitzfläche 27 begrenzt, die eine Einschuböffnung 26 enthält.

Seitlich an einer der Radialrippen 7, die die Buchsenaufnahme 11 begrenzen, ist am Deckelteil 5 eine Verrippung 32 angeformt. Gemäß der Darstellung in Fig. 4 kann die Verrippung 32 mehrere Rippen umfassen, die an den Verlauf der Radialrippen 7 angepasst sind und an der Oberseite der Aufnahme für das Verriegelungselement 10 aufsetzen. Der Darstellung gemäß Fig. 4 ist der die Unterbrechung 25 aufweisende erste zylindrische Aufnahmekörper 22 in vergrößertem Maßstab wiedergegeben. Die Unterbrechung 25 ist in einer mit Bezugszeichen 29 bezeichneten Schlitzbreite ausgeführt. Um die Schlitzbreite 29 liegen eine erste Stirnfläche 30 des sich vom zweiten Quersteg 42 aus erstreckenden Bereichs des ersten zylindrischen Aufnahmekörpers 22 und eine zweite Stirnfläche 31 des Bereiches des ersten zylindrischen Aufnahmekörpers 22, der am Quersteg 20 aufgenommen ist, auseinander. Der mit der Unterbrechung 25 ausgebildete, hier zweiteilig konfigurierte erste zylindrische Aufnahmekörper 22 umfasst einen Hohlraum 33, der sich durch beide Teilbereiche des durch die Unterbrechung 25 unterbrochenen ersten zylindrischen Aufnahmekörpers 22 erstreckt. Innerhalb dieser durch die Schlitzbreite 29 definierten Unterbrechung 25 des ersten zylindrischen Aufnahmekörpers 22 befindet sich das Sicherungselement 28. Dieses ist in der Darstellung gemäß Fig. 4 innerhalb der Unterbrechung 25 dargestellt und wird an einem - hier nicht wiedergegebenen - abgebogenen Ende des ersten Schenkels 16 des Verriegelungselements 10 (vgl. Darstellung gemäß Fig. 3) aufgenommen.

Der in der Darstellung gemäß Fig. 4 nicht oder nur teilweise wiedergegebene zweite zylindrische Aufnahmekörper 23 ist parallel zum ersten zylindrischen Aufnahmekörper 22 angeordnet. Zwischen dem ersten zylindrischen Aufnahmekörper 22 und dem zweiten zylindrischen Aufnahmekörper 23 sind Querstege 41, 42 bzw. 20 ausgebildet, welche die Aufnahme 9 für das Verriegelungselement 10 versteifen. Die Oberseiten der Querstege 41, 42, 20 sind als Planflächen 39 ausgebildet und sind ein Teil der Planfläche 21 der Oberseite der Aufnahme 9 für das Verriegelungselement 10. Die Oberseiten 40 der Querstege 41, 42, 20 sind mit Bezugszeichen 40 versehen und sind ebenfalls Teil der als Planfläche 21 ausgebildeten Oberseite der Aufnahme 9 für das Verriegelungselement 10. Aus der Darstellung gemäß Fig. 4 geht darüber hinaus hervor, dass an der Oberseite des ersten zylindrischen Aufnahmekörpers 22 eine sich in axialer Richtung bezogen auf den Hohlraum 33 des ersten zylindrischen Aufnahmekörpers 22 erstreckende Axialverrippung 43 ausgebildet ist. Die obere Planfläche der Axialverrippung 43 liegt ebenfalls in der Planfläche 21 auf der Oberseite der Aufnahme 9.

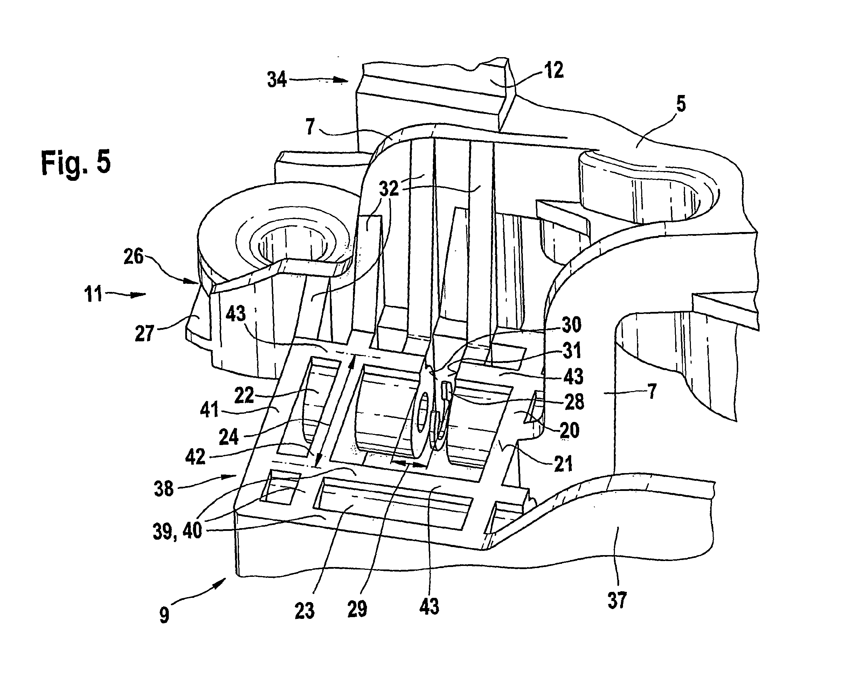

Fig. 5 ist eine perspektivische Draufsicht auf zwei parallel zueinander angeordnete zylindrische Aufnahmekörper im Bereich der Aufnahme für ein Verriegelungselement zu entnehmen.

Aus der Darstellung gemäß Fig. 5 geht hervor, dass die Aufnahme 9 für ein Verriegelungselement 10 mit dem Deckelteil 5 einerseits über eine mehrere Rippen umfassende Verrippung 32 im Bereich einer Radialrippe 7 verbunden ist und andererseits über einen Längsträger 37 mittels einer in Fig. 5 nicht dargestellten Radialrippe 7 (vgl. Darstellung gemäß Fig. 3) mit dem Deckelteil 5 verbunden ist. Darüber hinaus erstreckt sich zwischen der die Verrippung 32 aufnehmenden Seitenfläche der Radialrippe 7 und dem Längsträger 37 eine weitere Radialrippe 7, über welche die Aufnahme 9 zur Aufnahme eines Verriegelungselements mit dem bevorzugt als Kunststoffspritzgießteil herstellbaren Deckelteil 5 verbunden ist. Die Aufnahme 9 umfasst einen ersten Quersteg 41 sowie einen zweiten Quersteg 42 und einen Quersteg 20 im hinteren Bereich der Aufnahme 9 in Einschieberichtung des Verriegelungselements 10 gesehen.

Durch die zwischen dem ersten zylindrischen Aufnahmekörper 22 und dem zweiten zylindrischen Aufnahmekörper 23 sich erstreckenden Querstege 41, 42, 20 wird die Aufnahme 9 zur Aufnahme eines Verriegelungselements 10 erheblich versteift. Zur Versteifung der Aufnahme 9 tragen ferner die an der Oberseite der Umfangsflächen der zylindrischen Aufnahmekörper 22 und 23 ausgebildeten sich in axialer Richtung erstreckenden Längsverrippungen 43 bei. Sämtliche Stegflächen 40 sowohl die Flächen des ersten Querstegs 41, des zweiten Querstegs 42, des Querstegs 20, der Längsverrippung 43 als auch die Oberseite des Längsträgers 37, welche die Aufnahme 9 am Deckelteil 5 abstützt, sind als Planflächen beschaffen und bilden eine durchgängige ebene plane Oberseite 21 der Aufnahme 9. Der Abstand zwischen dem ersten zylindrischen Aufnahmekörper 22 und den zweiten zylindrischen Aufnahmekörper 23 ist durch Bezugszeichen 24 gekennzeichnet.

In der perspektivischen Ansicht 5 der Aufnahme für das Verriegelungselement sind die erste Stirnseite 30 sowie die zweite Stirnseite 31, welche die Unterbrechung 25 am ersten zylindrischen Aufnahmekörper 22 begrenzen, dargestellt. Die Unterbrechung 25 ist in einer Schlitzbreite 29 ausgebildet. In die Schlitzbreite im Bereich zwischen der ersten Stirnfläche 30 und der zweiten Stirnfläche 31 am ersten zylindrischen Aufnahmekörper 22 ist ein Sicherungselement 28 eingezeichnet, welches als verliersicher auf einem abgebogenen ersten Schenkel des Verriegelungselements 10 aufgenommener Sicherungsring ausgebildet sein kann. Durch die Schlitzbreite 29, d.h. den Abstand zwischen der ersten Stirnfläche 30 und der zweiten Stirnfläche 31 der Bereiche des ersten zylindrischen Aufnahmekörpers 22, wird ein Montagespiel bzw. eine Montagetoleranz definiert, mit der das in Fig. 5 nicht dargestellte Verriegelungselement mit seinen abgewinkelten Enden des ersten Schenkels 16 sowie des zweiten Schenkels 17 innerhalb seiner am Deckelteil 15 integrierten Aufnahme 9 bei der Montage bewegbar ist. Dadurch lassen sich Bauteiltoleranzen bei der Montage des Wischerantriebs 1 an der Heckscheibe eines Fahrzeugs ausgleichen, ferner wird die Montage durch den Werker erheblich vereinfacht.

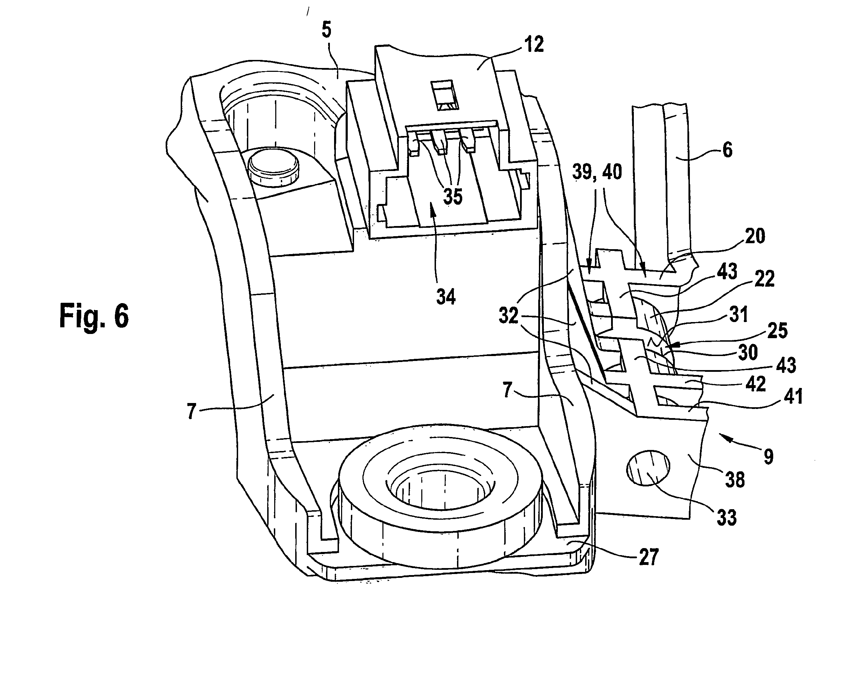

Darüber hinaus sind in Fig. 5 Teile der Steckeraufnahme 12 mit einer daran ausgebildeten Öffnung 34 zur Aufnahme eines Anschlusssteckers dargestellt, sowie eine von Radialrippen 7 der Deckelverrippung des Deckelteils 5 begrenzte Buchsenaufnahme 11, in deren Sitzfläche 27 eine Einschuböffnung 26 ausgebildet ist.
Der Darstellung gemäß Fig. 6 ist eine Ansicht eines zylindrischen Aufnahmekörpers innerhalb einer Aufnahme für ein Verriegelungselement zu entnehmen.

Vom bevorzugt als Kunststoffspritzgießteil ausgebildeten Deckelteil 5 eines Wischerantriebs erstrecken sich zwei im Wesentlichen parallel zueinander angeordnete Radialrippen 7. Diese begrenzen die Sitzfläche 27, welche zur Aufnahme eines Buchsenbauteils dient, welches der Entkopplung des Wischermotors 14 von der Heckscheibe dient.

Am Deckelteil 5 angespritzt ist eine Steckeraufnahme 12, in deren Öffnung 34 ein Steckeranschluss verrastbar ist. Der in Fig. 6 nicht dargestellte Anschluss kontaktiert Kontaktfahnen 35, die im Inneren der Steckeraufnahme 12 angeordnet sind.

Fig. 6 ist darüber hinaus der mit einer Unterbrechung 25 versehene erste zylindrische Aufnahmekörper 22 zu entnehmen. Der zylindrische Aufnahmekörper 22 ist von einem Hohlraum 33 durchzogen. Die Öffnung des Hohlraums 33, in welche ein erster Schenkel 16 des bügelförmig ausgebildeten Verriegelungselements 10 eingeführt werden kann, ist im Querträger 38 der Aufnahme 9 für das Verriegelungselement 10 ausgebildet. In Fig. 6 sind Teile des ersten Querstegs 41 bzw. des zweiten Querstegs 42 sowie des Querstegs 20 entnehmbar, durch welche die beiden zylindrischen Aufnahmekörper 22 bzw. 23 in Querrichtung versteift werden. Die mit Bezugszeichen 25 bezeichnete Unterbrechung des ersten zylindrischen Aufnahmekörpers 22 wird durch die erste Stirnfläche 30 und die zweite Stirnfläche 31 begrenzt. Der erste zylindrische Aufnahmekörper 22 weist darüber hinaus auf der Oberseite seiner Mantelfläche eine sich in axialer Richtung erstreckende Längsverrippung 43 auf. Sämtliche Stegflächen 40 der Querstege 20, 41, 42 bzw. der in axialer Richtung sich erstreckenden Axialverrippung 43 sind als Planflächen 39 ausgebildet. Wie in Fig. 6 angedeutet, wird die Aufnahme 9 für ein Verriegelungselement 10 über eine seitlich an die Radialrippe 7 angespritzte Verrippung 32 versteift, die in unterschiedlichen Geometrien ausformbare Einzelrippen umfassen kann.

Das in Fig. 6 dargestellte Deckelteil 5 des Wischerantriebs 1 gemäß der Darstellung in den Figuren 1 und 2 wird bevorzugt als Kunststoffspritzgießbauteil hergestellt. Bei der Herstellung des Deckelteils 5 kann in vorteilhafter Weise die Aufnahme 9 für das Verriegelungselement 10 angeformt werden und mit den entsprechenden sich in Längsrichtung erstreckenden Verrippungen 43 sowie den sich in Querrichtung erstreckenden Querstegen 20, 41 und 42 versehen werden. Die Verrippung 32 wird bei der Herstellung oder beim Anformen der Aufnahme 9 für das Verriegelungselement 10 direkt an die Radialrippe 7 angespritzt. Auch die Unterbrechung 25 in einer bestimmten, den gewünschten Toleranzen bzw. den Leerwegen entsprechenden Schlitzbreite 29 kann bei der Herstellung des als Spritzgießbauteil ausgebildeten Deckelteils 5 des Wischerantriebs 1 direkt vorgegeben werden. Eine eventuell erforderlichen Nacharbeit bezöge sich lediglich auf die Verarbeitung der Planfläche 20 an der Oberseite der Aufnahme 9. Auch die in dem ersten bzw. zweiten zylindrischen Aufnahmekörper 22 bzw. 23 ausgeführten Hohlräume 33 bedürfen keiner Nachbearbeitung mehr.

### Bezugszeichenliste

- 1: Wischerantrieb
- 2: Wischerarmaufnahme
- 3: konischer Bereich
- 4: Antriebswelle Wischarm
- 5: Deckelteil
- 6: Deckelverrippung
- 7: Radialrippe
- 8: Längsrippe
- 9: Aufnahme für Verriegelungselement
- 10: Verriegelungselement
- 11: Buchsenaufnahme
- 12: Steckeraufnahme
- 13: Spiel Verriegelungselement
- 14: Wischermotor
- 15: Getriebe
- 16: erster Schenkel Verriegelungselement
- 17: zweiter Schenkel Verriegelungs- element
- 18: Ummantelung
- 19: Bügelabschnitt
- 20: Quersteg
- 21: Planfläche
- 22: erster zylindrischer Aufnahmekörper
- 23: zweiter zylindrischer Aufnahmekörper
- 24: Abstand
- 25: Unterbrechung
- 26: Einschuböffnung
- 27: Sitzfläche Buchsenelement
- 28: Sicherungselement
- 29: Schlitzbreite
- 30: erste Stirnfläche
- 31: zweite Stirnfläche
- 32: Verrippung Aufnahme 9
- 33: Hohlraum
- 34: Steckeröffnung
- 35: Kontaktfahnen
- 36: Bewegungsrichtung Verriegelungs- element
- 37: Längsabstützung
- 38: Querabstützung
- 39: Planfläche
- 40: Stegoberseiten
- 41: erster Quersteg
- 42: zweiter Quersteg
- 43: Axialverrippung Aufnahmekörper
- 44: Scheibenfläche

## Patentansprüche

1. Wischerantrieb mit einer Wischarmaufnahme (2) zur Montage an einer schwenkbaren, mittels eines Verriegelungselements (10) verriegelbaren Scheibenfläche (44) eines Fahrzeugs, wobei der Wischerantrieb (1) ein Deckelteil (5) umfasst, in welchem ein Wischermotor (14) und ein diesem zugeordnetes Getriebe (15) aufgenommen sind, **dadurch gekennzeichnet, dass** in das Deckelteil (5) eine Aufnahme (9; 22; 23) für das Verriegelungselement (10; 16, 17) integriert ist, an dem ein zwischen Flächen (30, 31) der Aufnahme (9; 22, 23) angeordnetes Sicherungselement (28) aufgenommen ist.

2. Wischerantrieb gemäß Anspruch 1, **dadurch gekennzeichnet, dass** die Aufnahme (9; 22, 23) für das Verriegelungselement (10) über eine Längsabstützung (37) und eine Querabstützung (38) mit dem Deckelteil (5) verbunden ist.

3. Wischerantrieb gemäß Anspruch 1, **dadurch gekennzeichnet, dass** die Aufnahme (9; 22, 23) über eine Verrippung (32) mit einer Radialrippe (7) der Deckelverrippung (6) des Deckelteils (5) verbunden ist.

4. Wischerantrieb gemäß Anspruch 1, **dadurch gekennzeichnet, dass** die Aufnahme (9) einen ersten zylindrischen Aufnahmekörper (22) und einen zweiten zylindrischen Aufnahmekörper (23) umfasst.

5. Wischerantrieb gemäß Anspruch 4, **dadurch gekennzeichnet, dass** der erste zylindrische Aufnahmekörper (22) und der zweite zylindrische Aufnahmekörper (23) parallel zueinander angeordnet sind.

6. Wischerantrieb gemäß Anspruch 4, **dadurch gekennzeichnet, dass** einer der zylindrischen Aufnahmekörper (22, 23) eine Unterbrechung (25) aufweist, die durch eine erste Stirnfläche (30) und eine zweite Stirnfläche (31) des jeweiligen zylindrischen Aufnahmekörpers (22, 23) begrenzt ist.

7. Wischerantrieb gemäß Anspruch 4, **dadurch gekennzeichnet, dass** der erste zylindrische Aufnahmekörper (22) und der zweite zylindrische Aufnahmekörper (23) jeweils einen Hohlraum (33) zur Aufnahme eines Verriegelungselements (10) aufweisen.

8. Wischerantrieb gemäß Anspruch 1, **dadurch gekennzeichnet, dass** das Verriegelungselement (10) bügelartig ausgebildet ist und einen ersten Schenkel (16) sowie einen zweiten Schenkel (17) umfasst.

9. Wischerantrieb gemäß Anspruch 8, **dadurch gekennzeichnet, dass** das Sicherungselement (28) auf demjenigen der Schenkel (16, 17) des Verriegelungselements (10) aufgebracht ist, welcher den die Unterbrechung (25) aufweisenden zylindrischen Aufnahmekörper (22, 23) durchsetzt.

10. Wischerantrieb gemäß Anspruch 6, **dadurch gekennzeichnet, dass** die Unterbrechung (25) an einem der zylindrischen Aufnahmekörper (22, 23) in einer ein Montagespiel und einen Ausgleich von Bauteiltoleranzen ermöglichenden Schlitzbreite (29) ausgeführt ist.

11. Wischerantrieb gemäß Anspruch 1, **dadurch gekennzeichnet, dass** das Sicherungselement (28) als federnder Sicherungsring ausgeführt ist.

12. Wischerantrieb gemäß Anspruch 2, **dadurch gekennzeichnet, dass** die in das Deckelteil (5) integrierte Aufnahme (9; 22, 23) in Querrichtung versteifende Querstege (20, 40, 41) aufweist.

13. Wischerantrieb gemäß den Ansprüchen 1, 2 und 12, **dadurch gekennzeichnet, dass** die Oberseite der Aufnahme (9; 22, 23) als Planfläche (21, 39) ausgeführt ist.

14. Wischerantrieb gemäß den Ansprüchen 4 und 12, **dadurch gekennzeichnet, dass** die zylindrischen Aufnahmekörper (22, 23) der Aufnahme (9) für das Verriegelungselement (10) in Querrichtung durch Querstege (20, 41, 42) und in Längsrichtung durch eine Axialverrippung (43) versteift sind.

15. Wischerantrieb gemäß Anspruch 1, **dadurch gekennzeichnet, dass** das Deckelteil (5) mit integrierter Aufnahme (9; 22, 23) für das Verriegelungselement (10) ein Kunststoffspritzgießteil ist.

## Claims

1. Wiper drive with a wiper arm receptacle (2) for installing on a pivotable vehicle window surface (44) which is lockable by means of a locking element (10), wherein the wiper drive (1) comprises a cover part (5) in which a wiper motor (14) and a gear mechanism (15) assigned to the latter are accommodated, **characterized in that** a receptacle (9; 22; 23) for the locking element (10; 16, 17) is integrated into the cover part (5), and a securing element (28) which is arranged between surfaces (30, 31) of the receptacle (9; 22, 23) is accommodated on said locking element.

2. Wiper drive according to Claim 1, **characterized in that** the receptacle (9; 22, 23) for the locking element (10) is connected to the cover part (5) via a longitudinal support (37) and a transverse support (38).

3. Wiper drive according to Claim 1, **characterized in that** the receptacle (9; 22, 23) is connected to a radial rib (7) of the cover ribbed arrangement (6) of the cover part (5) via a ribbed arrangement (32).

4. Wiper drive according to Claim 1, **characterized in that** the receptacle (9) comprises a first cylindrical receiving body (22) and a second cylindrical receiving body (23).

5. Wiper drive according to Claim 4, **characterized in that** the first cylindrical receiving body (22) and the second cylindrical receiving body (23) are arranged parallel to each other.

6. Wiper drive according to Claim 4, **characterized in that** one of the cylindrical receiving bodies (22, 23) has an interruption (25) which is bounded by a first end surface (30) and a second end surface (31) of the respective cylindrical receiving body (22, 23).

7. Wiper drive according to Claim 4, **characterized in that** the first cylindrical receiving body (22) and the second cylindrical receiving body (23) each have a cavity (33) for receiving a locking element (10).

8. Wiper drive according to Claim 1, **characterized in that** the locking element (10) is of clip-like design and comprises a first limb (16) and a second limb (17).

9. Wiper drive according to Claim 8, **characterized in that** the securing element (28) is attached to that limb (16, 17) of the locking element (10) which passes through the cylindrical receiving body (22, 23) having the interruption (25).

10. Wiper drive according to Claim 6, **characterized in that** the interruption (25) is formed on one of the cylindrical receiving bodies (22, 23) in a slot width (29) which permits installation play and compensation for component tolerances.

11. Wiper drive according to Claim 1, **characterized in that** the securing element (28) is designed as a resilient securing ring.

12. Wiper drive according to Claim 2, **characterized in that** the receptacle (9; 22, 23) which is integrated into the cover part (5) has transverse webs (20, 40, 41) which provide reinforcement in the transverse direction.

13. Wiper drive according to Claims 1, 2 and 12, **characterized in that** the upper side of the receptacle (9; 22, 23) is designed as a flat surface (21, 39).

14. Wiper drive according to Claims 4 and 12, **characterized in that** the cylindrical receiving bodies (22, 23) of the receptacle (9) for the locking element (10) are reinforced in the transverse direction by transverse webs (20, 41, 42) and in the longitudinal direction by an axial ribbed arrangement (43).

15. Wiper drive according to Claim 1, **characterized in that** the cover part (5) with an integrated receptacle (9; 22, 23) for the locking element (10) is a plastic injection-moulded part.

## Revendications

1. Dispositif d'entraînement d'essuie-glace comprenant un logement de bras d'essuie-glace (2) destiné à être monté sur une surface de vitre (44) d'un véhicule pivotante verrouillable au moyen d'un élément de verrouillage (10), le dispositif d'entraînement d'essuie-glace (1) comprenant une partie de couvercle (5) dans laquelle sont reçus un moteur d'essuie-glace (14) et une transmission (15) associée à celui-ci, **caractérisé en ce qu'**un logement (9 ; 22 ; 23) pour l'élément de verrouillage (10 ; 16, 17) est intégré dans la partie de couvercle (5), sur lequel est reçu un élément de fixation (28) disposé entre des faces (30, 31) du logement (9 ; 22, 23).

2. Dispositif d'entraînement d'essuie-glace selon la revendication 1, **caractérisé en ce que** le logement (9 ; 22, 23) pour l'élément de verrouillage (10) est connecté à la partie de couvercle (5) par le biais d'un support longitudinal (37) et d'un support transversal (38).

3. Dispositif d'entraînement d'essuie-glace selon la revendication 1, **caractérisé en ce que** le logement (9 ; 22, 23) est connecté par le biais d'un ensemble de nervures (32) à une nervure radiale (7) de l'ensemble de nervures (6) de la partie de couvercle (5).

4. Dispositif d'entraînement d'essuie-glace selon la revendication 1, **caractérisé en ce que** le logement (9) comprend un premier corps de réception cylindrique (22) et un deuxième corps de réception cylindrique (23).

5. Dispositif d'entraînement d'essuie-glace selon la revendication 4, **caractérisé en ce que** le premier corps de réception cylindrique (22) et le deuxième corps de réception cylindrique (23) sont disposés parallèlement l'un à l'autre.

6. Dispositif d'entraînement d'essuie-glace selon la revendication 4, **caractérisé en ce que** l'un des corps de réception cylindriques (22, 23) présente une interruption (25), qui est limitée par une première surface frontale (30) et une deuxième surface frontale (31) du corps de réception cylindrique respectif (22, 23).

7. Dispositif d'entraînement d'essuie-glace selon la revendication 4, **caractérisé en ce que** le premier corps de réception cylindrique (22) et le deuxième corps de réception cylindrique (23) présentent à chaque fois une cavité (33) pour recevoir un élément de verrouillage (10).

8. Dispositif d'entraînement d'essuie-glace selon la revendication 1, **caractérisé en ce que** l'élément de verrouillage (10) est réalisé en forme d'étrier et comprend une première branche (16) ainsi qu'une deuxième branche (17).

9. Dispositif d'entraînement d'essuie-glace selon la revendication 8, **caractérisé en ce que** l'élément de fixation (28) est monté sur la branche (16, 17) de l'élément de verrouillage (10) qui traverse le corps de réception cylindrique (22, 23) présentant l'interruption (25).

10. Dispositif d'entraînement d'essuie-glace selon la revendication 6, **caractérisé en ce que** l'interruption (25) est réalisée sur l'un des corps de réception cylindriques (22, 23) dans une largeur de fente (29) permettant un jeu de montage et une compensation des tolérances des composants.

11. Dispositif d'entraînement d'essuie-glace selon la revendication 1, **caractérisé en ce que** l'élément de fixation (28) est réalisé sous forme de bague de fixation élastique.

12. Dispositif d'entraînement d'essuie-glace selon la revendication 2, **caractérisé en ce que** le logement (9 ; 22, 23) intégré dans la partie de couvercle (5) présente des nervures transversales (20, 40, 41) de renfort dans la direction transversale.

13. Dispositif d'entraînement d'essuie-glace selon les revendications 1, 2 et 12, **caractérisé en ce que** le côté supérieur du logement (9 ; 22, 23) est réalisé sous forme de surface plane (21, 39).

14. Dispositif d'entraînement d'essuie-glace selon les revendications 4 et 12, **caractérisé en ce que** les corps de réception cylindriques (22, 23) du logement (9) pour l'élément de verrouillage (10) sont renforcés dans la direction transversale par des nervures transversales (20, 41, 42) et dans la direction longitudinale par un ensemble de nervures axiales (43).

15. Dispositif d'entraînement d'essuie-glace selon la revendication 1, **caractérisé en ce que** la partie de couvercle (5) avec le logement intégré (9 ; 22, 23) pour l'élément de verrouillage (10) est une pièce moulée par injection de plastique.
